# EUROPÄISCHE PATENTSCHRIFT

(11) **EP 0 859 657 B1**
(45) Veröffentlichungstag und Bekanntmachung des Hinweises auf die Patenterteilung: **08.03.2000**
(21) Anmeldenummer: 96934771.5
(22) Anmeldetag: 21.10.1996
(51) Int. Cl.: B01D 35/147, B01D 27/10, B62D 5/06, F15B 21/04

(54) **ÖLBEHÄLTER, INSBESONDERE FÜR HYDRAULISCHE LENKSYSTEME VON KRAFTFAHRZEUGEN**
OIL CONTAINER INTENDED IN PARTICULAR FOR HYDRAULIC STEERING SYSTEMS IN MOTOR VEHICLES
RESERVOIR A HUILE, NOTAMMENT POUR SYSTEMES DE DIRECTION HYDRAULIQUES DE VEHICULES AUTOMOBILES

(30) Priorität: 26.10.1995 DE 19539759
(43) Veröffentlichungstag der Anmeldung: 26.08.1998
(73) Patentinhaber: ZF FRIEDRICHSHAFEN Aktiengesellschaft, 88038 Friedrichshafen (DE)
(72) Erfinder: BURDIAK, Johannes, D-73529 Schwäbisch Gmünd (DE)
(86) Internationale Anmeldenummer: EP9604566
(87) Internationale Veröffentlichungsnummer: WO9715373

(56) Entgegenhaltungen:
- DE-A- 2 440 000
- DE-A- 2 742 610
- US-A- 3 142 640
- US-A- 4 935 128

## Beschreibung

Die Erfindung betrifft einen Ölbehälter nach dem Oberbegriff des Anspruches 1.

Ein derartiger Ölbehälter ist aus der DE 27 42 610 A1 bekannt. Dieser Ölbehälter weist einen Behältertopf auf, der von einem Deckel verschlossen ist. Im Inneren des Ölbehälters befindet sich ein im wesentlicher zylinderförmiger, abgedeckter Filtereinsatz. Dieser Filtereinsatz wird durch eine Feder zur Bildung eines Überdruckventils gegen einen Dichtsitz gedrückt. Der Dichtsitz befindet sich an einem dem Deckel gegenüberliegenden Behälterboden des Behälters und umgibt einen Zulauf, der an dem Ölbehälter angeordnet ist und in einen Innenraum des Filtereinsatzes einmündet. Eine Ablaufleitung ist außerhalb des Filtereinsatzes an den Ölbehälter angeschlossen, so daß die Zulaufleitung und die Ablaufleitung durch den Filtereinsatz voneinander getrennt sind.

Derartige Ölbehälter dienen als Vorratsbehälter und als Ausgleichsgefäß für Hydraulikkreisläufe, beispielsweise für hydraulische Lenksysteme von Kraftfahrzeugen. Durch den eingebauten Filtereinsatz wird vermieden, daß evtl. mitgeschwemmte Schmutzpartikelchen aus dem Ölkreislauf in die Saugleitung und damit in die Pumpe gelangen.

Ein übergroßer Druck in der Zulaufleitung und damit in dem Filtereinsatz kann zu einer Beschädigung des Filtereinsatzes und im schlimmsten Fall zu einem Platzen des Filtereinsatzes und einer Beschädigung des Ölbehälters führen. Um dies zu vermeiden, ist ein Überdruckventil oder Filtersicherungsventil vorgesehen. Das Überdruckventil wird durch den federbelasteten Filtereinsatz und den Dichtsitz am Boden des Behältertopfes gebildet. Nachteilig ist bei dieser Konstruktion, daß bei einem Abheben des Filtereinsatzes von dem Dichtsitz Schmutzpartikel, die sich im Innenraum des Filtereinsatzes angesammelt haben, aus dem Filtereinsatz heraus in den Ölbehälter und damit in die Ablaufleitung zur Pumpe geschwemmt werden können.

Ähnliche Verhältnisse liegen bei einem aus der US 4,953,128 A bekannten Ölbehälter vor.

Dieses Problem wird bei einem aus der DE 24 40 000 C3 bekannten Ölbehälter durch ein sogenanntes Vorab-Bypass-Ventil gelöst, das in der Zulaufleitung vor dem Filtereinsatz angeordnet ist. Bei diesem Vorab-Bypass-Ventil kann bei einem Überdruck in der Zulaufleitung eine Ventilplatte von einem Ventiltopf abheben und damit unter Umgehung des Filters eine Verbindung von der Zulaufleitung in das Innere des Ölbehälters herstellen. Um ein Ansaugen von verschmutztem Öl aus dem Innenraum des Filtereinsatzes zu verhindern, ist zwischen dem Innenraum des Filtereinsatzes und dem Vorab-Bypass-Ventil ein Rückschlagventil angeordnet, das in Richtung auf den Innenraum des Filtereinsatzes öffnet. Obwohl bei dieser Anordnung das Problem, Schmutzpartikel von der Ablaufleitung und von der Pumpe fernzuhalten, sehr sicher gelöst ist, hat diese Lösung den Nachteil, daß eine Vielzahl von teilweise komplizierten Bauteilen die Konstruktion stark verteuert.

Aus diesen Kostengründen wurde möglicherweise bei dem weiter oben beschriebenen Ölbehälter nach der DE 27 42 610 A1 auf ein Vorab-Bypass-Ventil verzichtet.

Der Erfindung liegt nun die Aufgabe zugrunde, die Nachteile nach dem Stand der Technik zu vermeiden und einen Ölbehälter zu schaffen, bei dem ohne großen konstruktiven Aufwand vermieden wird, daß durch das sich öffnende Überdruckventil Schmutzpartikel aus dem Innenraum des Filtereinsatzes in die Ablaufleitung zur Pumpe geschwemmt werden.

Diese Aufgabe wird durch den im Anspruch 1 gekennzeichneten Ölbehälter gelöst. Vorteilhafte und zweckmäßige Ausgestaltungen der Erfindung sind in den Unteransprüchen angegeben.

Die Lösung erfolgt gemäß Anspruch 1 dadurch, daß der Filtereinsatz einen von seiner dem Dichtsitz zugewandten Stirnseite in seinen Innenraum hineinragenden zylindrischen Fortsatz aufweist. Durch diesen zylindrischen Fortsatz wird im unteren Bereich des Filtereinsatzes ein ausreichend großer Raum geschaffen, in dem sich Schmutzpartikel absetzen können. Das Überdruckventil ist als Vorab-Bypass-Ventil ausgebildet, d. h., daß beim Öffnen dieses Ventiles eine direkte Verbindung von dem Zulauf zum Innenraum des Ölbehälters unter Umgehung des Filters geschaffen wird.

Der zylindrische Fortsatz läßt sich konstruktiv besonders einfach ausbilden, wenn der Fortsatz mit dem dem Dichtsitz zugewandten Boden des Filtereinsatzes einstückig ausgebildet ist.

Eine Lösung, die eine besonders umweltfreundliche Entsorgung des Filtereinsatzes ermöglicht, besteht darin, daß alle Einzelteile des Filtereinsatzes aus metallfreien Werkstoffen, insbesondere aus Kunststoffen, bestehen. Die Einzelteile des Filtereinsatzes sind zweckmäßigerweise unlösbar miteinander verbunden. Dadurch ergibt sich eine einfache Montage des Ölbehälters.

Um zu verhindern, daß der Filtereinsatz auf seinem Dichtsitz, der einen möglichst kleinen Durchmesser aufweisen soll, kippt oder pendelt, wird am Boden des Behälters eine außerhalb des Dichtsitzes liegende, umlaufende Stützkante vorgesehen. Diese Stützkante ist aus herstellungstechnischen Gründen zweckmäßigerweise konzentrisch zu dem Dichtsitz ausgebildet. Radial innerhalb und außerhalb des Dichtsitzes und in der Stützkante sind strömungsgünstige Abströmöffnungen ausgebildet, die ein möglichst widerstandsfreies Abströmen des Öles beim Öffnen des Überdruckventils gewährleisten.

Im folgenden wird die Erfindung anhand eines in der Zeichnung dargestellten Ausführungsbeispieles näher erläutert.

Es zeigen:

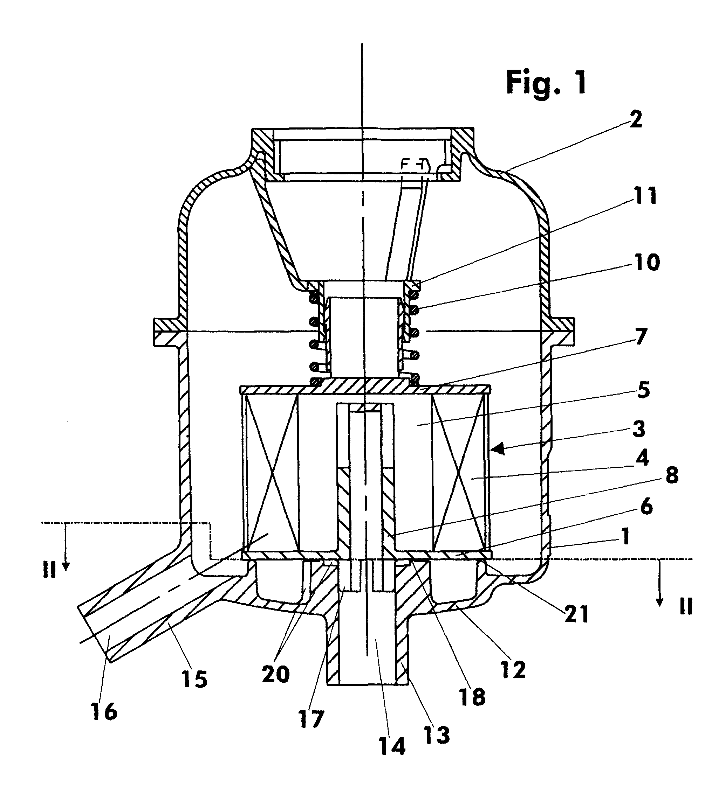

- Fig. 1: einen Längsschnitt durch den erfindungsgemäßen Ölbehälter und
- Fig. 2: einen Querschnitt nach der Linie II-II in Fig. 1.

Der Ölbehälter besitzt einen Behältertopf 1, der von einem Deckel 2 verschlossen ist. Im Inneren des Behältertopfes 1 befindet sich ein im wesentlichen zylinderförmiger Filtereinsatz 3 mit einem Filter 4, dessen Innenraum 5 durch einen Filterträger 6 und einen Filterdeckel 7 begrenzt ist. Alle drei Teile bestehen aus nichtmetallischen Werkstoffen, vorzugsweise aus Kunststoff. Filterträger 6, Filter 4 und Filterdeckel 7 werden vor der Montage in den Behältertopf 1 fest, beispielsweise durch Verkleben, miteinander verbunden.

Der Filterträger 6 weist in seiner Mitte einen hohlzylindrischen Fortsatz 8 auf, der in den Innenraum 5 des Filtereinsatzes 3 hineinragt. Wenn der Filterträger 6 aus Kunststoff besteht, läßt er sich sehr einfach einstückig mit dem Fortsatz 8 herstellen.

Zwischen dem Filtereinsatz 3 und dem Deckel 2 ist eine Feder 10 angeordnet, die sich einerseits an dem Filterdekel 7 und andererseits an einem Federträger 11 abstützt. Der Federträger 11 ist in dem Deckel 2 fixiert.

Die Feder 10 drückt den Filtereinsatz 3 von dem Dekel 2 weg in Richtung auf ein Wandstück des Ölbehälters in der Form eines Behälterbodens 12.

In dem Behälterboden 12 befindet sich - vorzugsweise in zentraler Lage - ein Zulaufanschluß 13 mit einem Zulauf 14 und am Rand ein Ablaufanschluß 15 für eine Ablaufleitung 16. An den Zulaufanschluß 13 ist eine nicht dargestellte Zulaufleitung angeschlossen.

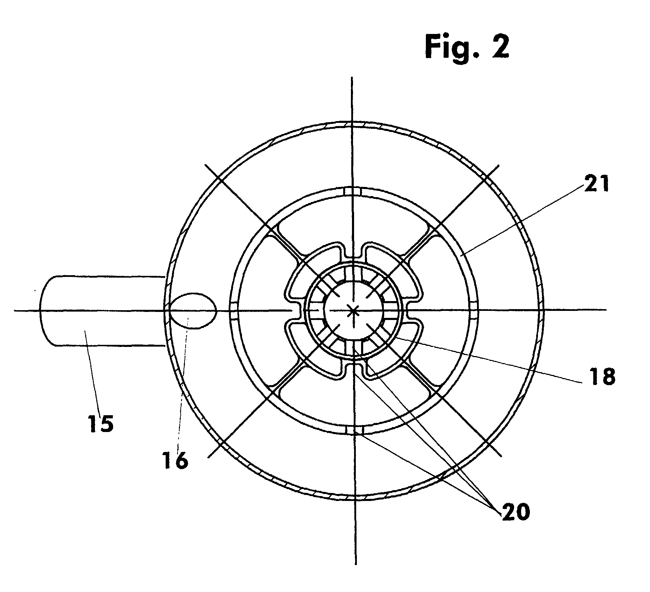

Der Filtereinsatz 3 ist mit einem in Richtung auf den Behälterboden 12 vorstehenden Ansatz 17 des Filterträgers 6 in dem Zulaufanschluß 13 zentriert. Konzentrisch zu dem Zulaufanschluß 13 und zu dem Zulauf 14 ist an dem Behälterboden 12 ein Dichtsitz 18 angeordnet. Der Dichtsitz 18 ist durch eine ringförmige Dichtkante gebildet, die nur wenige Zehntel Millimeter von einer ebenen Fläche des Behälterbodens 12 vorsteht. Radial innerhalb und radial außerhalb des Dichtsitzes 18 sind in dem Behälterboden Abströmöffnungen 20 angeordnet, die besonders deutlich in Fig. 2 sichtbar sind.

Der Durchmesser des Dichtsitzes 18 sowie seine Breite wird möglichst klein gewählt, um eine gute Abdichtung zu gewährleisten. Um ein Abkippen bzw. Pendeln des Filtereinsatzes 3 auf einer derart kleinen Auflagefläche zu verhindern, wird zweckmäßigerweise radial außerhalb des Dichtsitzes 18 und konzentrisch zu diesem eine umlaufende Stützkante 21 für den Filtereinsatz 3 angeordnet. Auch im Bereich der Stützkante 21 sind Abströmöffnungen 20 vorgesehen.

Bei einem Ansteigen des Öldruckes in der Zulaufleitung 14 über einen bestimmten maximalen Wert, der durch die Feder 10 und die Größe des Durchmessers des Dichtsitzes 18 festgelegt ist, hebt der Filtereinsatz 3 von dem Dichtsitz 18 ab. Wenn der Filtereinsatz 3 von dem Dichtsitz 18 abgehoben hat, besteht eine Verbindung von dem Zulauf 14 zu der Ablaufleitung 16. Wegen des in den Innenraum 5 des Filtereinsatzes 3 hineinragenden Fortsatzes 8 können keine Schmutzpartikel, die sich an dem Boden des Filtereinsatzes 3 abgesetzt haben, mitgerissen werden. Wenn das Überdruckventil bei Kaltstart der Servopumpe öffnet, können auch durch die Sogwirkung keine Schmutzpartikel aus dem Filtereinsatz 3 herausgezogen werden.

### Bezugszeichen

- 1: Behältertopf
- 2: Deckel
- 3: Filtereinsatz
- 4: Filter
- 5: Innenraum
- 6: Filterträger
- 7: Filterdeckel
- 8: Fortsatz
- 9: -
- 10: Feder
- 11: Federträger
- 12: Behälterboden
- 13: Zulaufanschluß
- 14: Zulauf
- 15: Ablaufanschluß
- 16: Ablaufleitung
- 17: Ansatz
- 18: Dichtsitz
- 19: -
- 20: Abströmöffnung
- 21: Stützkante

## Patentansprüche

1. Ölbehälter, insbesondere für hydraulische Lenksysteme von Kraftfahrzeugen, mit folgenden Merkmalen:
- der Ölbehälter weist einen Behältertopf (1) auf, der von einem Deckel (2) verschlossen ist;
- ein im wesentlichen zylinderförmiger, abgedeckter Filtereinsatz (3) wird durch eine Feder (10) zur Bildung eines Überdruckventils gegen einen Dichtsitz (18) gedrückt,
- der Dichtsitz (18) liegt an einem dem Deckel (2) gegenüberliegenden Wandstück (Behälterboden 12) des Ölbehälters;
- der Dichtsitz (18) umgibt einen an dem Ölbehälter angeordneten und in einen Innenraum (5) des Filtereinsatzes (3) einmündenden Zulauf (14), der durch den Filtereinsatz (3) von einer außerhalb des Filtereinsatzes (3) an den Ölbe-hälter angeschlossenen Ablaufleitung (16) getrennt ist,
dadurch **gekennzeichnet**, daß der Filtereinsatz (3) einen von seiner dem Dichtsitz (18) zugewandten Stirnseite in seinen Innenraum (5) hineinragenden zylindrischen Fortsatz (8) aufweist, durch den hindurch der Zulauf (14) geführt ist.

2. Ölbehälter nach Anspruch 1, dadurch **gekennzeichnet**, daß der Fortsatz (8) mit einem Filterträger (6) des Filtereinsatzes (3) einstückig ausgebildet ist, wobei der Filterträger (6) einen dem Dichtsitz (18) zugewandten Boden des Filtereinsatzes (3) bildet.

3. Ölbehälter nach Anspruch 2, dadurch **gekennzeichnet**, daß die Einzelteile des Filtereinsatzes (3) aus metallfreien Werkstoffen bestehen.

4. Ölbehälter nach Anspruch 3, dadurch **gekennzeichnet**, daß die Einzelteile aus Kunststoff bestehen.

5. Ölbehälter nach Anspruch 4, dadurch **gekennzeichnet**, daß die Einzelteile unlösbar miteinander verbunden sind.

6. Ölbehälter nach Anspruch 1, dadurch **gekennzeichnet**, daß das den Dichtsitz (18) aufweisende Wandstück (Behälterboden 12) des Ölbehälters eine außerhalb des Dichtsitzes (18) liegende, umlaufende Stützkante (21) für den Filtereinsatz 3 aufweist.

7. Ölbehälter nach Anspruch 6, dadurch **gekennzeichnet**, daß die Stützkante (21) konzentrisch zu dem Dichtsitz (18) ausgebildet ist.

8. Ölbehälter nach Anspruch 6, dadurch **gekennzeichnet**, daß radial innerhalb und außerhalb des Dichtsitzes (18) und im Bereich der Stützkante (21) Abströmöffnungen (20) für eine strömungsgünstige Führung des Ölstromes von dem Zulauf (14) zu der Ablaufleitung (16) vorgesehen sind.

## Claims

1. Oil container, in particular for hydraulic steering systems of motor vehicles, having the following features:
- the oil container comprises a container pot (1), which is closed by a lid (2);
- a substantially cylindrical, covered filter cartridge (3) is pressed by a spring (10) against a sealing seat (18) to form a pressure relief valve,
- the sealing seat (18) lies against a wall piece (container base 12) of the oil container lying opposite the lid (2);
- the sealing seat (18) surrounds an inlet (14) disposed on the oil container and opening into an interior space (5) of the filter cartridge (3), which inlet is separated by the filter cartridge (3) from an outlet line (16) connected outside of the filter cartridge (3) to the oil container,
characterized in that the filter cartridge (3) has, projecting into its interior space (5) from its end directed towards the sealing seat (18), a cylindrical extension (8) through which the inlet (14) extends.

2. Oil container according to claim 1, characterized in that the extension (8) is integrally formed with a filter carrier (6) of the filter cartridge (3), wherein the filter carrier (6) forms a base of the filter cartridge (3) directed towards the sealing seat (18).

3. Oil container according to claim 2, characterized in that the individual parts of the filter cartridge (3) are made of non-metallic materials.

4. Oil container according to claim 3, characterized in that the individual parts are made of plastic material.

5. Oil container according to claim 4, characterized in that the individual parts are non-detachably connected to one another.

6. Oil container according to claim 1, characterized in that the wall piece (container base 12) of the oil container comprising the sealing seat (18) has a circumferential supporting edge (21), which lies outside of the sealing seat (18), for the filter cartridge 3.

7. Oil container according to claim 6, characterized in that the supporting edge (21) is formed concentrically with the sealing seat (18).

8. Oil container according to claim 6, characterized in that provided radially inside and outside of the sealing seat (18) and in the region of the supporting edge (21) are discharge openings (20) for flow-promoting guidance of the oil stream from the inlet (14) to the outlet line (16).

## Revendications

1. Réservoir à huile, notamment pour systèmes de direction hydrauliques de véhicules automobiles, présentant les caractéristiques suivantes :
- le réservoir à huile présente un pot de réservoir (1) fermé par un couvercle (2);
- une cartouche filtrante (3) recouverte, d'une forme essentiellement cylindrique est poussée par un ressort (10) contre un siège d'étanchéité (18) pour former une soupape de surpression;
- le siège d'étanchéité (18) se trouve contre une partie de la paroi (fond de réservoir 12) du réservoir à huile située en face du couvercle (2);
- le siège d'étanchéité (18) entoure une arrivée (14) qui est séparée, par la cartouche filtrante (3), d'une conduite de sortie (16) raccordée au réservoir à huile à l'extérieur de la cartouche filtrante (3), et qui est disposée sur le réservoir à huile et débouchant dans un espace interne (5) de la cartouche filtrante (3),
**caractérisé** en ce que la cartouche filtrante (3) présente un prolongement (8) cylindrique s'étendant, par son côté frontal tourné vers le siège d'étanchéité (18), dans son espace interne (5), et par lequel passe l'arrivée (14).

2. Réservoir à huile selon la revendication 1, **caractérisé** en ce que le prolongement (8) forme une seule pièce avec un support de filtre (6) de la cartouche filtrante (3), le support de filtre (6) formant un fond de la cartouche filtrante (3) tourné vers le siège d'étanchéité (18).

3. Réservoir à huile selon la revendication 2, **caractérisé** en ce que les éléments constituant la cartouche filtrante (3) sont fabriqués en matériaux exempts de métal.

4. Réservoir à huile selon la revendication 3, **caractérisé** en ce que les éléments constituants sont fabriqués en matière synthétique.

5. Réservoir à huile selon la revendication 4, **caractérisé** en ce que les éléments constituants sont reliés entre eux de façon non détachable.

6. Réservoir à huile selon la revendication 1, **caractérisé** en ce que la partie de la paroi (fond de réservoir 12) du réservoir à huile comportant le siège d'étanchéité (18) comporte un bord d'appui (21) s'étendant sur tout le pourtour, à l'extérieur du siège d'étanchéité (18), pour la cartouche filtrante (3).

7. Réservoir à huile selon la revendication 6, **caractérisé** en ce que le bord d'appui (21) est concentrique au siège d'étanchéité (18).

8. Réservoir à huile selon la revendication 6, **caractérisé** en ce que des orifices d'écoulement (20) pour favoriser le flux de l'huile à partir de l'arrivée (14) vers la conduite de sortie (16) sont prévus radialement à l'extérieur et à l'intérieur du siège d'étanchéité (18) et dans la zone du bord d'appui (21 ).
